# EUROPEAN PATENT APPLICATION

(11) **EP 4 575 648 A1**
(43) Date of publication of application: **25.06.2025**
(21) Application number: 24220462.6
(22) Date of filing: 17.12.2024
(51) Int. Cl.: G03G 15/00, G03G 21/16, G03G 21/18

(54) **ELECTRONIC APPARATUS**

(30) Priority: 21.12.2023 JP 2023215456
(71) Applicant: KYOCERA Document Solutions Inc., Osaka-shi, Osaka, 540-8585 (JP)
(72) Inventor: NAKATANI, Takanobu, Osaka-shi, Osaka, 540-8585, (JP)
(74) Representative: Winter, Brandl - Partnerschaft mbB

(57) **Abstract**

An electronic apparatus includes plural motor units exchangeable with each other. Each of the plural motor units includes a counter that counts an accumulated number of rotations or accumulated operation time and displays any of the accumulated number of rotations, the accumulated operation time and a remaining lifetime based on the accumulated number of rotations or the accumulated operation time.

## Description

### BACKGROUND

### 1. FIELD OF THE PRESENT INVENTION

The present invention relates to an electronic apparatus.

### 2. DESCRIPTION OF THE RELATED ART

An image forming apparatus includes a built-in sheet transportation device, and determines a lifetime of DC motor or the like in the sheet transportation device on the basis of a rotation speed of the DC motor.

Another image forming apparatus includes plural sheet feeding cassettes, counts the number of times of sheet feeding by a roller in each sheet feeding cassette, and performs indication to prompt exchange between a roller feeding sheets a large number of times and a roller feeding sheets a small number of times in plural sheet feeding cassettes.

However, in the aforementioned image forming apparatus, a count value is not maintained by the roller itself or the sheet feeding cassette itself, and consequently, after plural rollers are demounted, these rollers may be mounted to wrong cassettes in error, and it is bothersome because the counting of sheet feeding by the roller must be continued through the exchange.

### SUMMARY

An electronic apparatus according to the present invention includes plural motor units exchangeable with each other. Each of the plural motor units includes a counter configured to count an accumulated number of rotations or accumulated operation time and display any of the accumulated number of rotations, the accumulated operation time and a remaining lifetime based on the accumulated number of rotations or the accumulated operation time.

These and other objects, features and advantages of the present invention will become more apparent upon reading of the following detailed description along with the accompanied drawings.

### BRIEF DESCRIPTION OF THE DRAWINGS

Fig. 1 shows a block diagram that indicates a configuration of an electronic apparatus according to an embodiment of the present invention; and
Fig. 2 shows a side-view diagram that indicates an example of a motor unit 1 shown in Fig. 1.

### DETAILED DESCRIPTION

Hereinafter, an embodiment according to an aspect of the present invention will be explained with reference to drawings.

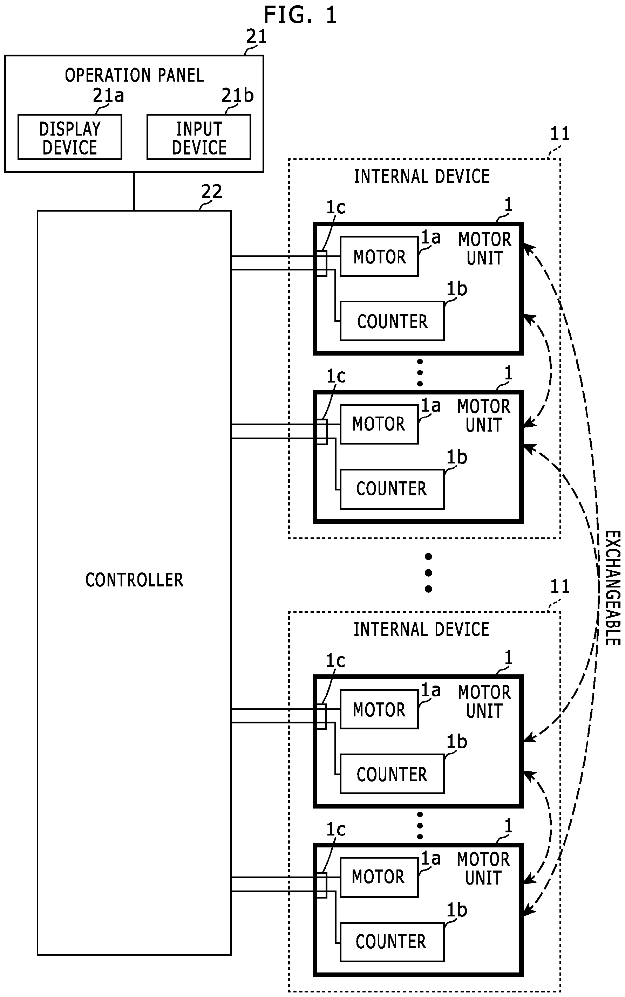

Fig. 1 shows a block diagram that indicates a configuration of an electronic apparatus according to an embodiment of the present invention. The electronic apparatus includes plural motor units 1, an operation panel 21, and a controller 22. The motor units 1 are driving force sources of sheet transportation or the like in an internal device 11. For example, this electronic apparatus is an image forming apparatus such as a multi function peripheral, and includes as the internal device 11 a printing device, an image scanning device and/or the like.

The plural motor units 1 are exchangeable with each other, and each of the motor units 1 is a motor assy (assembly) that includes a motor 1a, a counter 1b, and a connector 1c.

The counter 1b counts an accumulated number of rotations or accumulated operation time of the motor 1a and displays any of (a) the accumulated number of rotations, (b) the accumulated operation time and (c) a remaining lifetime based on the accumulated number of rotations or the accumulated operation time. Therefore, even when the motor unit 1 is demounted, a user can see (a) the accumulated number of rotations, (b) the accumulated operation time, (c) the remaining lifetime and/or the like of this motor unit 1.

For example, the counter 1b may be a mechanical counter or an electronic counter. If the counter 1b is an electronic counter, the counter 1b detects the number of rotations using a rotary encoder or the like, counts an accumulated number of rotations or an accumulated operation time using an electronic circuit and stores it into a nonvolatile memory, and displays the accumulated number of rotations, the accumulated operation time, the remaining lifetime and/or the like using a small display panel or an indicator.

To the connector 1c, a harness is detachable and attachable. The harness makes electric connection between the controller 22 and the motor unit 1 and between the controller 22 and a power supply (not shown).

The operation panel 21 is arranged in a front side of the image forming apparatus, and includes a display device 21a such as a liquid crystal display and an input device 21b such as a touch panel and/or a hard key. The display device 21a displays sorts of information to a user. The input device 21b detects a user operation inputted by a user to the hard key or the soft key.

The controller 22 is a computer or the like, controls the internal device 11 and thereby performs a job (such as printing, scanning, copying or the like). The controller 22 may read count values from the respective counters 1d in the plural motor units 1 and may display the count values on the display device 21a.

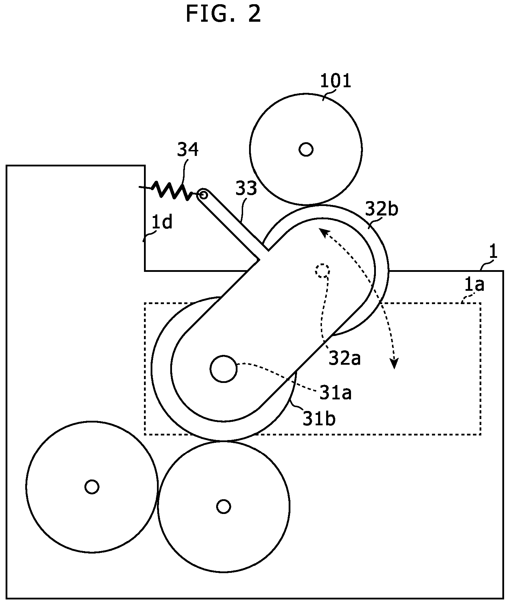

Fig. 2 shows a side-view diagram that indicates an example of a motor unit 1 shown in Fig. 1. As shown in Fig. 2, for example, the motor unit 1 further includes a housing 1d to which the motor 1a and the like are fixed, a gear 31b connected to a rotation axis 31a of the motor 1a, a gear 32b that is connected to the gear 31b and rotates around a rotation axis 32a as a center.

The gear 32b is connected to an external gear 101 and enabled to be apart from the external gear 101 when the plural motor units 1 are exchanged. When the gear 32b is apart from the external gear 101, demounting and mounting of the motor unit 1 can be easily performed. For example, the motor unit 1 is fixed with a few screws, and therefore a user can easily perform demounting and mounting of the motor unit 1.

As shown in Fig. 2, for example, a swinging member 33 is installed such that the swinging member 33 is enabled to swing around the rotation axis 31a as a center, and the rotation axis 32a is installed on the swinging member 33. Further, a spring 34 adds force to the swinging member 33 such that the gear 32b makes contact to the external gear 101.

When exchanging plural motor units 1, the swinging member 33 is caused to swing against a restoring force of the spring 34 by a manual operation or an electromotive operation, and thereby the gear 32b becomes apart from the external gear 101. For example, if the swinging member 33 is caused to swing by an electromotive operation, an actuator is installed for the electromotive operation, and the controller 22 displays a soft key to demount the plural motor units 1 on the display device 21a with the aforementioned count values, and if pressing down of the soft key is detected by the input device 21b, causes the actuator to act and thereby causes the swinging member 33 to swing. During this action, power supply to the motor units 1 is cut off.

The following part explains the aforementioned electronic apparatus.

The controller 22 controls the internal device 11 (the motor 1a) corresponding to a job to be performed and thereby performs the job. At that time, the counter 1b in the motor unit 1 counts and renews the accumulated number of rotations and/or the accumulated operation time of the motor 1a correspondingly to operation of the motor 1a, and displays the accumulated number of rotations, the accumulated operation time, the remaining lifetime and/or the like.

A different internal device 11 is used in accordance with a type of a job to be performed, and operation frequencies of the motor units 1 in the internal device 11 are different from each other. Therefore, the count values (such as the accumulated number of rotations, the accumulated operation time or the remaining lifetime) displayed on the counters 1b in the plural motor units 1 are different from each other.

A user visually understands the count values such as the accumulated number of rotations, the accumulated operation time or the remaining lifetime displayed on the counters 1b in the plural motor units 1, and exchanges a motor unit 1 of a large count value and a motor unit 1 of a small count value among the plural motor units 1. Consequently, the accumulated number of rotations, the accumulated operation time or the remaining lifetime gets close to evenness among the plural motor units 1.

As mentioned, in the aforementioned embodiment, the electronic apparatus includes plural motor units 1 exchangeable with each other. Further, each of the plural motor units 1 includes the counter 1b that counts an accumulated number of rotations or accumulated operation time and displays any of the accumulated number of rotations, the accumulated operation time and a remaining lifetime based on the accumulated number of rotations or the accumulated operation time.

Consequently, a user can easily understand a lifetime of each of the motor units 1 and can easily exchange the motor units 1 with each other.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned embodiment, the motor unit 1 may be exchangeable with a motor unit in another electronic apparatus of a different type.

Further, in the aforementioned embodiment, the motor unit 1 may be exchanged with a brand-new motor unit 1.

## Claims

1. An electronic apparatus, comprising
plural motor units exchangeable with each other;
wherein each of the plural motor units comprises a counter configured to count an accumulated number of rotations or accumulated operation time and display any of the accumulated number of rotations, the accumulated operation time and a remaining lifetime based on the accumulated number of rotations or the accumulated operation time.

2. The electronic apparatus according to claim 1, wherein each of the motor units comprises a housing, a motor, and a gear configured to connect with an external gear; and
the gear is enabled to be apart from the external gear when the plural motor units are exchanged.

3. The electronic apparatus according to claim 1, further comprising:
a display device; and
a controller;
wherein the controller reads count values of the counters from the plural motor units and displays the count values on the display device.
